# EUROPEAN PATENT APPLICATION

(11) **EP 4 616 986 A1**
(43) Date of publication of application: **17.09.2025**
(21) Application number: 25160954.1
(22) Date of filing: 28.02.2025
(51) Int. Cl.: B23K 9/12, B23K 9/127

(54) **SYSTEM AND METHOD FOR WELD SEAM TRACKING**

(30) Priority: 01.03.2024 US 202463560236 P
(71) Applicant: Magna International Inc., Aurora, ON L4G 7K1 (CA)
(72) Inventor: Petrin, Georg, 2542 Kottingbrunn (AT); Bertalan, Dominik, 2753 Dreistetten (AT)
(74) Representative: Grünecker Patent- und Rechtsanwälte PartG mbB

(57) **Abstract**

A system and method tracking location of a seam between metal parts before, during and/or after a process of joining the parts together is provided. The parts are typically formed of steel or aluminum and designed for use in a vehicle. The parts are typically joined together by welding, such as gas metal arc welding. A cell contains the parts to be joined, and a measuring device is mounted on a wall of the cell for detecting the location of a seam between the parts. The system further includes a software algorithm and a controller for determining a joining path, controlling and/or adjusting the joining process based on the location of the seam detected by the measuring device. The measuring device can detect other features, such as presence of a gap between the parts, height of the parts, and location of the weld seam after the joining process.

## Description

### CROSS-REFERENCE TO RELATED APPLICATIONS

This U.S. Non-Provisional Patent Application claims the benefit of and priority to U.S. Provisional Patent Application Serial No. 63/560236, filed March 1, 2024, titled "System and Method for Weld Seam Tracking," the entire disclosure of which is hereby incorporated by reference in its entirety.

### BACKGROUND OF THE INVENTION

### 1. Field of the Invention

The invention relates generally to a system and method for tracking location of a seam between two or more parts during a process of joining the parts together, for example two steel parts joined by gas metal arc welding.

### 2. Related Art

Welding is one technique often use to form components from multiple parts. For example, gas metal arc welding, can be used to join two metal parts, such as steel or aluminum, together to provide a component for use in a vehicle.

One challenge faced during the welding process is the presence of defects due to lack of suitable systems and methods for tracking the location of a seam between the two parts being joined together. The defects could lead to compromised weld quality, which could require reworking of the weld or scrapping of the parts. The defects could also lead to potential safety concerns associated with using the components with the compromised weld quality. It is desirable to implement an effective weld seam tracking system and method to address these problems and overcome the challenges associate with welding.

### SUMMARY

One aspect of the disclosure provides a system for determining location of a seam between parts. The system includes at least one robot for controlling and adjusting movement of at least one joining tool for joining parts together; and a measuring device spaced from the at least one robot and the at least one joining tool for determining location of a seam between the parts before, during, and/or after the joining step.

Another aspect of the disclosure provides a method for determining location of a seam between parts. The method includes joining parts together along at least one seam between the parts using at least one robot controlling and adjusting movement of at least one joining tool; and determining a location of the at least one seam located between parts before, during, and/or after the joining step using a measuring device. The measuring device is spaced from the at least one robot and the at least one joining tool.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 illustrates a system for tracking location of a seam between two parts during a process of welding the two parts together according to an example embodiment;
Figure 2 illustrates two parts and a camera for detecting location of a seam between the two parts according to an example embodiment; and
Figure 3 illustrates a method for determining location of a seam between two parts before, during and/or after a process of welding the two parts together according to an example embodiment.

### DESCRIPTION OF EXAMPLE EMBODIMENTS

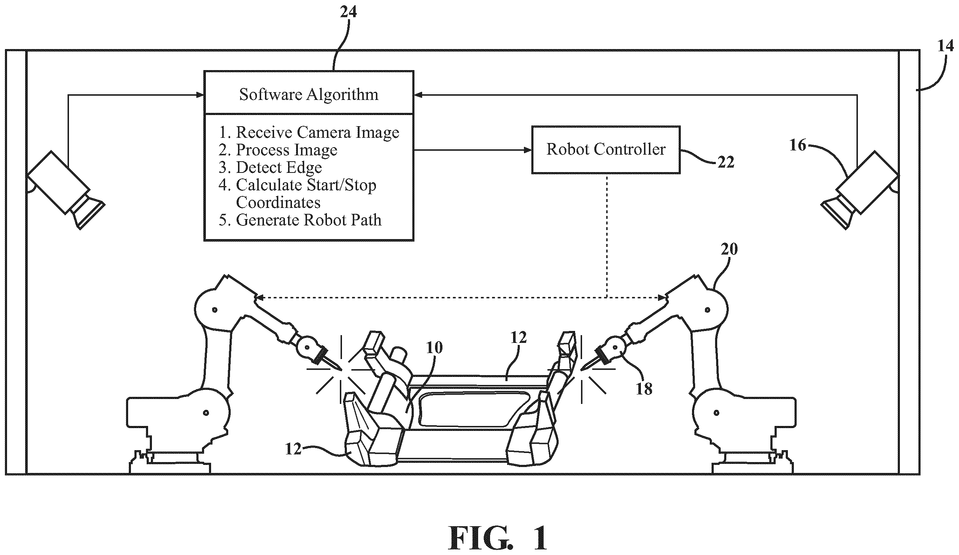

One aspect of the disclosure provides a system and method for tracking location of a seam **10** between two or more parts **12** before, during and/or after a process of joining the two parts **12** together. The system and method is independent of any robot, welding gun, welding torch, or other piece of equipment used to join or perform a process on the parts **12.** The system and method can also include quality of a weld located along the seam **10** between the parts **12.** An example of the system is shown in Figure 1.

As shown in Figure 1, the system includes a cell **14** for containing the parts **12** to be joined. Typically, the parts **12** are disposed within a welding fixture, but they can be located on other equipment. The cell **14** has multiple walls that surround an enclosed space. Two or more parts **12** are disposed in the cell **14** for joining. The parts **12** are typically formed of metal, such as steel, aluminum, or an aluminum alloy. The shape of the parts **12** is typically designed for use in a vehicle application. The process of joining the parts **12** together typically includes welding, such as gas metal arc welding, laser welding, or laser brazing operations. However, the joining process can include other techniques, such as by an adhesive.

The system further includes at least one measuring device **16** for detecting the location of the seam **10** between the two parts **12** during and/or after a process of joining the parts **12** together. The measuring device **16** can be any device capable of detecting the location of the seam **10,** such as a camera, laser, or scanner. According to one example embodiment, the measuring device **16** is a camera with a 75 mm objective and red spotlight. This type of camera is able to detect edges and thus is feasible for seam tracking, can detect multiple positions in a single image, and includes multiple points output for curve tracking. According to another example embodiment, the measuring device **16** includes a camera and laser. In this case, the measuring device **16** is able to generate three dimensional images (x-axis, y-axis, z-axis) and includes a detection window from 2000mm with a accuracy of ± 0.4 mm (1260x1260x1000mm). This measuring device **16** is also able to detect multiple positions in a single image. According to another example embodiment, the measuring device **16** is a 2D or 3D line scanner.

In the example of Figure 1, the measuring device **16** of the system includes two cameras disposed on opposite sides of the parts **12** being joined. The system could include additional measuring devices **16** if needed to view all edges of the parts **12.** The measuring device **16** is typically mounted on a wall of the cell **14** at a location that allows the measuring device **16** to view the seam **10** between the parts **12** being joined. Alternatively, the measuring device **16** could be disposed on a separate stand inside of the cell **14.**

The example system of Figure 1 also includes at least one welding gun **18** for joining the parts **12** together. According to the example embodiment, the welding gun **18** performs a gas metal arc welding process on the parts **12.** During the welding process, an electric arc forms between a consumable wire electrode and the metal parts **12,** which heats the parts **12** and causes them to melt and join together. A shielding gas is also fed through the welding gun **18,** which shields the process from atmospheric contamination. However, other equipment can be used to join the parts **12** together or process the parts **12.** In the case of laser welding or joining by adhesive, for example, no welding guns are needed but other tools are used in place of the welding gun **18.** Each welding gun **18,** or other tool, is typically connected to a robot **20,** and the robot **20** controls the movement of the welding gun **18**

The system further includes a controller **22** in communication with the measuring device **16,** the robot **20,** and/or the welding gun **18.** The controller **22** is typically connected to the robot **20** which controls movement of the welding gun **18.** According to the example embodiment, the controller **22** includes a software algorithm **24,** or is in communication with the software algorithm **24,** which is capable of carrying out the method. The system can also include multiple robots **20** controlled by the same or different controllers **22** and software algorithm **24.**

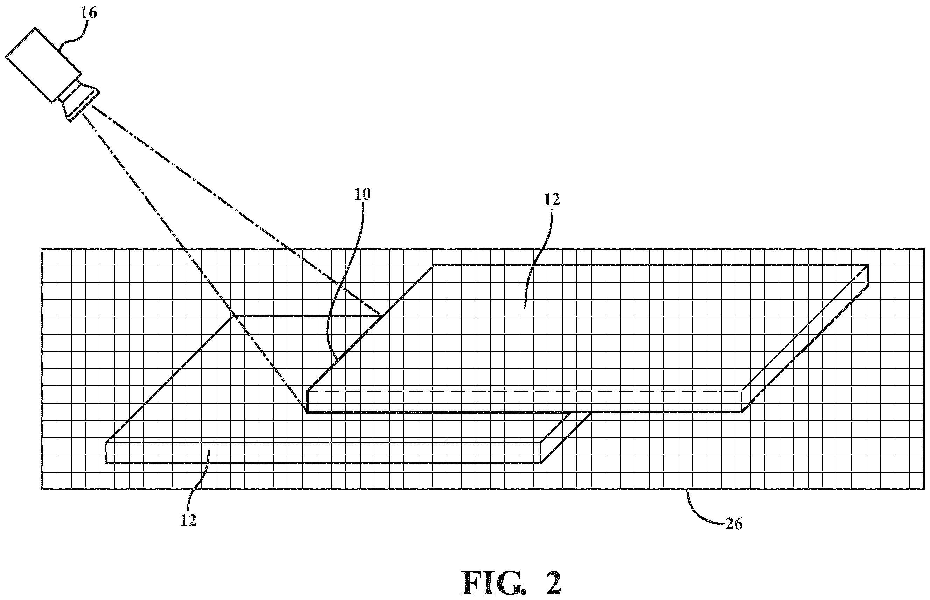

The method typically includes determining a preferred path for the seam **10** between the two parts **12,** for example the desired location of the weld. In this case, the method includes placing the parts **12** to be joined in the cell **14** and using the measuring device **16** to obtain one or more images of the two parts **12,** particularly in the area of the seam **10.** The images are processed and used by the software algorithm **24** to determine the location of the edges and/or height of the parts **12.** Figure 2 illustrates a laser grid **26** used to determine the edge locations, seam **10,** and heights of the parts **12.** The laser grid **26** is not always needed as it depends on the reflectivity and contrast of the parts **12** to be welded. The software algorithm **24** then calculates desired start and end coordinates or otherwise determines a desired location of a weld along the seam **10** between the parts **12,** and generates a path for the robot **20** to follow during the welding process in order to obtain the desired location of the welded seam **10.**

The method can also include obtaining images of the welded seam **10** throughout the joining process, and using the controller **22** to adjust the path of the robot **20,** and thus the location of the welded seam **10,** when the seam **10** deviates from the desired path. The controller **22** could also adjust other welding parameters to achieve the desired process, such as wire feed speed, energy, stick out, torch angle, and/or temperature. The system may be designed to track the location of the unwelded or welded seam **10** in real time throughout the joining process. At the end of the process, the measuring device **16** can obtain images of the finished welded seam **10** to confirm that the welded seam **10** is in an acceptable location.

Due to the placement of the measuring device **16,** the system is able to obtain images and adjust the paths of all robots **20** at once. This is an advantage over comparative systems which include a camera mounted on one of the robots, in which case the images obtained at any given time include only the path of the one robot. In addition, due to the placement of the measuring device **16,** if the parts **12** include multiple seams **10,** the location of all seams **10** between the parts **12** can be determined at the same time. If one measuring device **16** is located directly above the seam **10** and can only provide an image showing two dimensions (x-axis, y-axis), then an additional measuring device **16** located at the side of the seam **10** may be needed to provide an image showing the third dimension (z-axis).

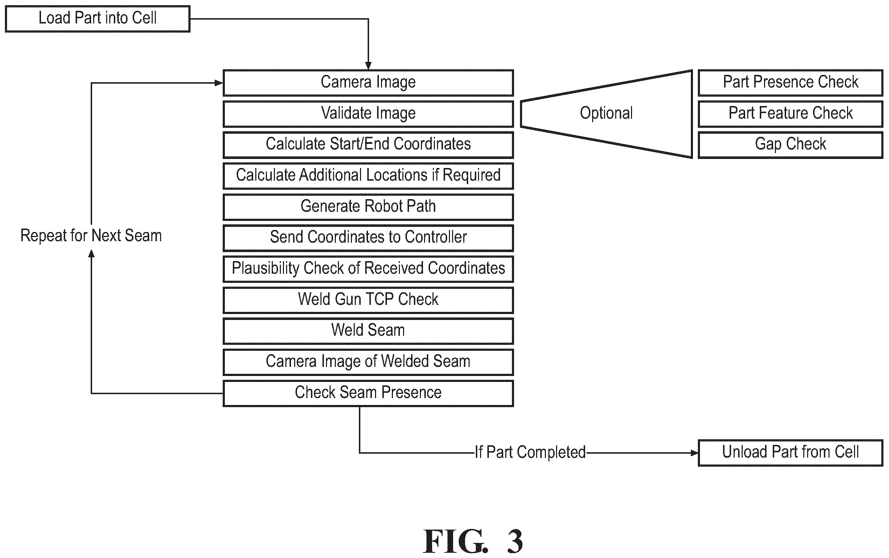

In addition to the steps discussed above, which typically include generating location information about the seam **10** and the parts **12** to be welded to generate a desired path, sending the location of the seam **10** and the parts **12** and optionally a deviation from the expected locations to the robot **20** before and during the welding step, and directing all robots **20** to weld according to the generated path, the method can include other steps. For example, the method can be applied to other applications which involve the use of a robot **20,** for example other joining, handling, or grinding methods. The method could incorporate an automated check for presence of the parts **12** and/or additional features, such as weld nuts, bolts, or holes, present in the part **12,** before, during, and/or after welding. The method could also check to see if a weld seam **10** has been previously generated, measure gaps between the parts **12** before welding, measure the location of the parts **12** before and after welding, and measure any distortion of the parts **12** after welding. The method can also include checking the plausibility of the desired weld path and location of the welding gun **18.** The method is typically repeated multiple times in order to weld multiple parts **12.** A method according to another example embodiment with additional optional steps is shown in Figure 3.

As indicated above, the system and method described herein provides numerous advantages. First, the system is a robot-independent seam tracking system that can be mounted at the cell level, eliminating limitations associated with traditional tracking systems mounted on individual robots. Since the system is robot-independent, it is not highly dependent on welding direction or limited to the specific piece of equipment they are mounted on. There is no limitation in welding direction. The system and method can also improve weld quality and reduces welding defects by accurately tracking and adjusting the welding path on the actual edges of the parts **12,** ensuring precise and consistent welded seams **10** and thus less scrap. The robot-independent system and method disclosed herein offers greater flexibility and eliminates the need for multiple tracking devices **16.** It is capable of tracking edges of parts **12** in various different welding scenarios. The system is also highly accurate and efficient.

Obviously, many modifications and variations of the present invention are possible in light of the above teachings and may be practiced otherwise than as specifically described while within the scope of the following claims.

## Claims

1. A system for determining location of a seam between parts, comprising:
at least one robot for controlling and adjusting movement of at least one joining tool for joining parts together; and
a measuring device spaced from the at least one robot and the at least one joining tool for determining location of a seam between the parts before, during, and/or after the joining step.

2. The system of claim 1 including a controller in communication with the measuring device and the at least one robot for controlling and/or adjusting the movement of the at least one robot based on the location of the seam determined by the measuring device.

3. The system of claim 2, wherein the controller is in communication with a software algorithm.

4. The system of claim 1 including a cell for containing the parts, the at least one robot, the at least one joining tool, and the measuring device.

5. The system of claim 4, wherein the measuring device is mounted on a wall of the cell or disposed on a stand in the cell.

6. The system of claim 1, wherein the joining tool is a welding gun for welding the parts together.

7. The system of claim 1, wherein the measuring device includes a camera.

8. The system of claim 1 including a cell for containing the parts, the at least one robot, the at least one joining tool, and the measuring device;
the measuring device being disposed in the cell or mounted on a wall of the cell;
the parts being disposed on a welding fixture in the cell;
the parts being formed of metal;
the at least one joining tool including a welding gun for welding the parts together; and
the measuring device including a camera.

9. The system of claim 1, wherein the system includes a plurality of the robots and a plurality of the joining tools, and wherein each robot controls one of the joining tools.

10. A method for determining location of a seam between parts, comprising:
joining parts together along at least one seam between the parts using at least one robot controlling and adjusting movement of at least one joining tool;
determining a location of the at least one seam located between parts before, during, and/or after the joining step using a measuring device, wherein the measuring device is spaced from the at least one robot and the at least one joining tool.

11. The method of claim 10 including controlling and/or adjusting the movement of the at least one robot based on the location of the at least one seam determined by the measuring device.

12. The method of claim 10, wherein the measuring device is mounted on a wall of the cell or disposed on a stand in the cell.

13. The method of claim 10, wherein the measuring device includes a camera, and the method further includes obtaining images of the parts using the camera to determine the location of the at least one seam before, during, and/or after the joining step.

14. The method of claim 10, wherein the joining step includes welding the parts together.

15. The method of claim 10 including a plurality of the seams located between the parts, and the method further includes determining the locations of all of the seams between the parts using the measuring device.

16. The method of claim 15, wherein the at least one robot includes a plurality of the robots, the at least one joining tool includes a plurality of the joining tools, and the method further includes controlling and/or adjusting the movement of the robots and joining tools based on the location of the seams determined by the measuring device.

17. The method of claim 10 including determining a desired path of the at least one robot to follow during the joining step based on the location of the at least one seam determined by the measuring device prior to the joining step.

18. The method of claim 17 including controlling and/or adjusting the path of the at least one robot during the joining step based on the desired path.

19. The method of claim 10 including determining the location of each seam of the at least one seam located between the parts before, during, and after the joining step using the measuring device, and wherein the measuring device includes a single camera.

20. The method of claim 10 including determining a presence of features or holes in the parts before, during, and/or after the joining step using the measuring device.
